# EUROPEAN PATENT APPLICATION

(11) **EP 3 064 974 A1**
(43) Date of publication of application: **07.09.2016**
(21) Application number: 15305319.4
(22) Date of filing: 03.03.2015
(51) Int. Cl.: G02B 6/44

(54) **Cable for downhole well monitoring**

(71) Applicant: Nexans, 75008 Paris (FR)
(72) Inventor: Vintermyr, Inge, 0676 Oslo (NO)
(74) Representative: Feray, Valérie

(57) **Abstract**

The present invention concerns the design of cables comprising optical fibers for use for downhole monitoring such as inside an oil or gas well.

The present invention provides an optical fiber cable comprising a cable core (1) comprising one or more optical fibers; a first metal tube (2) surrounding said cable core (1); a vault armouring layer (3) surrounding said first tube (2), wherein said vault armouring layer (3) comprises numerous armouring wires (3a, 3b); a second metal tube (4) surrounding said vault armouring layer (3); an outer insulation jacket (5) of a polymer surrounding said second tube (4). The present invention also concerns the use of such cable inside an oil or gas well for monitoring at high depths below 2000 meters, more preferable below 5000 meters, yet more preferable below 8000 meters.

## Description

### Technical field

The present invention concerns the design of cables comprising optical fibers for use for downhole monitoring such as inside an oil or gas well.

### Background

Optical fibers are used in a variety of applications. In a downhole situation, such as inside an oil or gas well, optical fibers can be used for well monitoring. The temperature, pressure and chemical environment found in wells require special considerations in order to protect the optical fibers. Especially as the walls are extending deeper and further the exposure time increases. Protection of optical fibers in cables by surrounding the optical fibers with protective layers is known.

US 2014/0212609 A1 discloses a downhole fiber optical cable with a central steel tube comprising the fiber optical cable. A strength member metal tube surrounds the center tube. Armouring wires are arranged on the outside of the strength member tube, and an outer layer of insulation is made of polycarbonate based polyurethane.

US 2012/0125596 A1 discloses a design of an optical fiber cable for downhole situations. The optical fiber cable is designed to be installed with the use of a carrier. Multiple fiber optic devices can be deployed within the cable for various purposes. The cable comprises a center comprising optical fibers. The center is surrounded by an inner tube (12) which can be made from a metallic material. One layer of armouring wires (14) are placed around the periphery of the central tube. Further the cable is designed with an outer tube (16) around the armouring wires, and a jacket (18) surrounding the outer tube.

However, the cables known from the prior art don't provide solutions to all the challenges. For instance, they cannot survive for extended periods in a downhole environment without degrading. The outer diameter of the cables is not considered to be small enough for depths below 8000 meters because they can only sustain their own weight until a limited depth. To be able to sustain their own weight at great depths such as below 8000 meters the outer diameter of the cable known from prior art is increased by adding additional layers of armouring making them unsuitable for downhole employment in wells with limited diameter.

There is therefore a need to improve the design and adapt the contents of the protective layers in the cable in order to overcome these challenges.

It is therefore an object of the present invention to provide a cable that permanently or temporarily can be deployed in abrasive environments like deep oil or gas wells.

It is also an object of the present invention to provide a cable which has a small outer diameter (OD) since there is a limited amount of space within a bore hole.

It is also an object of the present invention to provide a cable which can sustain its own weight in order to be able to be installed without the need of any supplementary equipment also in very deep wells, such as deeper than 8000 meters.

It is also an object of the present invention to be able to provide a cable that can act as a power/signal conductor as well as an optical fiber cable.

### Summary of the invention

The present invention is set forth and characterized in the main claims, while the dependent claims describe other characteristics of the invention.

In particular, the present invention provides an optical fiber cable for monitoring inside deep downhole situations at depths below 2000 meters, more preferably below 5000 meters, more preferably below 8000 meters, wherein the need of service of the cable, which exposes the cables to large tensile forces and dynamic motion which will induce fatigue problems, is minimized or preferably non-existing.

The present invention is directed to an optical fiber cable comprising a cable core which comprises optical fiber(s), a first tube surrounding the cable core. The optical fiber is preferably a high temperature resistant fiber, resistant to temperatures above 100 °C, more preferably above 150 °C and even more preferably above 200 °C.

Further the cable comprises a vault armouring layer which surrounds the first tube, wherein the vault armouring layer comprises numerous armouring wires. Surrounding the armouring layer there is a second metal tube and an outer insulation jacket of a polymer layer surrounding the second tube.

The present invention is further directed to a cable comprising a cable core surrounded by several layers which can sustain abrasive environment and support the content, like fiber optics, in the core of the cable.

The present invention is further directed to a cable wherein the vault armouring layer comprises closed packed armouring wires in order to obtain a small OD. The OD of the second metal tube is typically between 5-30 mm, preferably between 5-25 mm, and more preferably between 5-20 mm.

It is preferable to have a small OD since there is a limited space within a wellbore. The closed packed structure of the armouring wires also contributes to a higher strength within the cable.

In another advantageous embodiment of the cable, the vault armouring layer comprises a pressure compensated filling to block longitudinal gas migration.

In another advantageous embodiment of the cable, the second tube comprises copper which is applicable for power or signal transmission as well as being a strength member.

In another advantageous embodiment, the insulating jacket comprises a fluoropolymer in order for the cable to be able to operate at high temperatures, at lest up to 260 °C. A fluoropolymer is preferred because it resists corrosion and high temperatures and it sustains abrasive environments. Preferred fluoropolymers are ethylene tetrafluoroethylene (ETFE), perfluoroalkoxy alkane (PFA), fluorinated ethylene propylene (FEP) or ethylene-fluorinated ethylene propylene (EFEP).

The term "vault armouring layer" as used herein refers to a layer which comprises closed packed armouring wires radially stacked in a vault configuration. The vault armouring layer is installed between two metal tubes.

As used in the present description, the term "fiber optical cable" is a cable with a main purpose of transferring signals via fiber optical elements. In addition the cable may include any type of longitudinal conduit for signals or electric current as a secondary purpose. In order for the cable according to the invention to be applicable for downhole use, the cable must have a significant smaller diameter than the diameter of the pipeline in which it is to be arranged.

In the following detailed description, specific details are introduced to provide a thorough understanding of embodiments of the claimed cable. One skilled in the relevant art, however, will recognize that these embodiments can be practiced without one or more of the specific details, or with other components. In other instances, well-known designs are not shown, or are not described in detail, to avoid obscuring aspects of the disclosed embodiments.

### Brief description of drawing

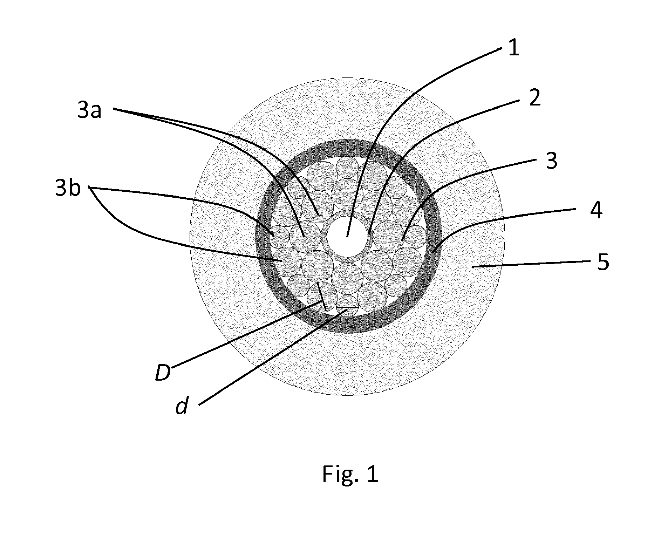

Fig. 1 is a cross-sectional view of a cable in accordance with an embodiment of the invention.

### Detailed description of the invention

Hereinafter, an exemplary embodiment will be described with reference to fig. 1.

Referring to fig. 1 there is shown a particular embodiment of the cable which comprises a cable core 1 comprising one or more optical fibre(s) (not shown). Further the cable core may be filled with a hydrogen absorbing filling compound in order to protect the optical fibres from interaction with hydrogen. Hydrogen absorbing compositions are well known in the art, for instance from US 20040109652 A1 wherein it may comprise an oil, a thixotropic agent, an antioxidant system, and a carbon nanostructure component; wherein the carbon nanostructure component is hydrogen absorbent.

The cable core 1 is surrounded by a first metal tube 2 functioning as a strength member. The metal can be any metal providing sufficient strength, such as steel. This tube also gives the optical fibres additional protection from gases trying to diffuse into the cable.

The first tube 1 is surrounded by a vault armouring layer 3 which protects the first tube 2 and it gives the cable its longitudinal strength.

Outside the vault armouring layer there is a second metal tube 4, the metal may be selected from various steel types, tungsten, copper, titanium alloys and aluminium alloys. Additionally, in one embodiment the second metal tube 4 is made of a conductive material such as copper or aluminum. The second tube acts as a metal barrier for gas that tries to diffuse into the optical fibers as well as acting as a strength member. If the second tube comprises a conductive material, the tube may also act as a power and or signal conductor.

The second tube is surrounded by an outer insulation jacket 5. The outer insulation jacket 5 may be a polymer, preferably a fluoropolymer which has an operating temperature at least up to 260 °C, which is higher than the polymers used in the prior art. The fluoropolymer resists corrosion and sustains abrasive environments.

In fig. 1 the vault armouring layer 3 contains numerous armouring wires 3a, 3b. Relevant examples of metals for the wires and one or both tubes with high tensile strength may be various steel types, tungsten, copper, copper alloys, titanium alloys and aluminium alloys.

The armouring wires 3a, 3b are arranged to achieve highest possible density such as in a vault configuration in which the wires 3a, 3b are radially stacked in a closed packed structure (cps) or near closed packed structure. To obtain the desired cps different wire diameters may be used. In the specific embodiment shown in fig. 1 an inner layer of armouring wires 3a is arranged in direct contact with the first tube 2. An outer layer of armouring wires 3b with alternating diameters, bigger diameter D and smaller diameter *d* is arranged around the inner layer of armouring wires 3a. The diameter of the armouring wires in the inner layer 3a may in one embodiment be larger than the diameter *D* of the largest wire in the outer layer 3b. The outermost rim of each armouring wire 3b is hence defining a perfect or near perfect circle. By using this arrangement of packing the armour wires a very small OD of the cable and a very strong cable is obtained.

The interstices between the armouring wires can be filled with a pressure compensating filling compound that will reduce the risk of crack formation and block longitudinal gas migration. The filling compound may be an elastic material, typically a petroleum jelly or rubber polyurethane.

In the preceding description, various aspects of the cable according to the invention are described with reference to the illustrative embodiment. For the purpose of explanation, a specific configuration is set forth in order to provide a thorough understanding of the design of the cable. However, this description is not intended to be construed in a limiting sense. Various modifications and variations of the illustrative embodiment which are apparent to persons skilled in the art to which the disclosed subject matter pertains, are deemed to lie within the scope of the present invention.

Also various arrangement and diameters of the armouring wires in a closed packed structure within the vault armouring layer are deemed to lie within the scope of the present invention.

### List of reference numerals:

| | |
|---|---|
| Cable core | 1 |
| First tube | 2 |
| Vault armouring layer | 3 |
| Armouring wires | 3a |
| Armouring wires | 3b |
| Second tube | 4 |
| Outer insulation jacket | 5 |

## Claims

1. An optical fiber cable comprising;
- a cable core (1) comprising one or more optical fibers;
- a first metal tube (2) surrounding said cable core (1);
- a vault armouring layer (3) surrounding said first tube (2), wherein said vault armouring layer (3) comprises numerous armouring wires (3a, 3b);
- a second metal tube (4) surrounding said vault armouring layer (3);
- an outer insulation jacket (5) of a polymer surrounding said second tube (4).

2. The cable of claim 1, wherein said cable core (1) comprising optical fibers further comprises a hydrogen absorbing filling compound.

3. The cable of claim 1 or 2, wherein the outer diameter of the armouring wires (3a, 3b) differs in order to maximize the armouring layer density.

4. The cable according to any of the previous claims, wherein the interstices between said armouring wires (3a, 3b) are filled with a pressure compensating filling to block longitudinal gas migration.

5. The cable according to any of the previous claims, wherein said second metal tube (4) is made of a conductive material, preferably copper.

6. The cable of claim 5, wherein said second metal tube (4) is a copper tube applicable for power and or signal transmission.

7. The cable according to any of the previous claims, wherein said polymer is a fluoropolymer.

8. The cable of claim 7, wherein said fluoropolymer is ethylene tetrafluoroethylene (EFTE), perfluoroalkoxy alkane (PFA), fluorinated ethylene propylene (FEP) or ethylene-fluorinated ethylene propylene (EFEP).

9. The cable according to any of the previous claims, wherein the optical fiber is a high temperature resistant fiber, resistant to temperatures above 100 °C, more preferably above 150 °C and even more preferably above 200 °C.

10. The cable according to any of the previous claims, wherein the cable is self sustainable when deployed at depths below 2000 meters, more preferable below 5000 meters, yet more preferable below 8000 meters.

11. Use of the cable according to any of the claims 1-10, inside an oil or gas well for monitoring at high depths below 2000 meters, more preferable below 5000 meters, yet more preferable below 8000 meters.
